# EUROPÄISCHE PATENTSCHRIFT

(11) **EP 2 748 493 B1**
(45) Veröffentlichungstag und Bekanntmachung des Hinweises auf die Patenterteilung: **04.01.2017**
(21) Anmeldenummer: 12758794.7
(22) Anmeldetag: 23.08.2012
(51) Int. Cl.: F16J 15/06, F16J 15/10, G01F 1/58, F16L 23/22

(54) **L-DICHTRING**
L-SHAPED PACKING RING
JOINT D'ÉTANCHÉITÉ ANNULAIRE EN FORME DE L

(30) Priorität: 24.08.2011 DE 102011081491
(43) Veröffentlichungstag der Anmeldung: 02.07.2014
(73) Patentinhaber: Endress+Hauser Flowtec AG, 4153 Reinach (BL) (CH)
(72) Erfinder: BÄHR, Günther, CH-4106 Therwil (CH); VOIGT, Frank, 79576 Weil am Rhein (DE)
(74) Vertreter: Andres, Angelika Maria
(86) Internationale Anmeldenummer: PCT/EP2012/066399
(87) Internationale Veröffentlichungsnummer: WO 2013/026898

(56) Entgegenhaltungen:
- EP-A1- 1 662 276
- DE-A1-102007 040 099
- GB-A- 1 314 941
- JP-A- 7 280 612
- JP-A- 2007 304 040

## Beschreibung

Die vorliegende Erfindung betrifft eine Vorrichtung mit einem magnetisch-induktiven Durchflussmessgerät und einem Prozessanschluss und einem L-Dichtring, wobei der L-Dichtring zwischen dem magnetisch-induktiven Durchflussmessgerät und dem Prozessanschluss eingesetzt ist.

L-Dichtringe sind dem Fachmann bekannt. So werden sie seit langem als Dichtungselement zwischen einem magnetisch-induktiven Durchflussmessgerät und einem separaten Prozessanschluss eingesetzt, z.B. von der Firma Endress+Hauser in den Produkten Promag H und Dosimag, aber auch von der Firma Krohne im Optiflux 6000.

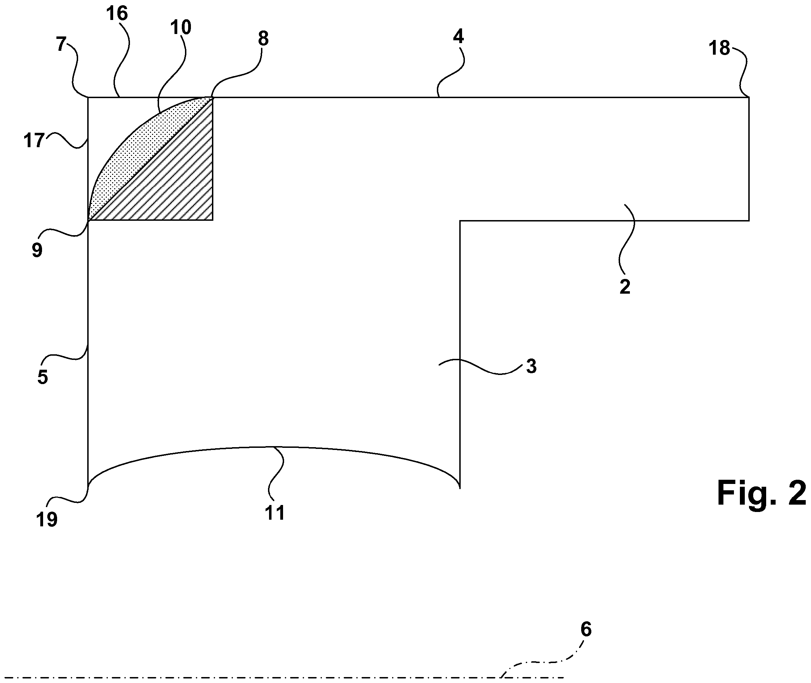

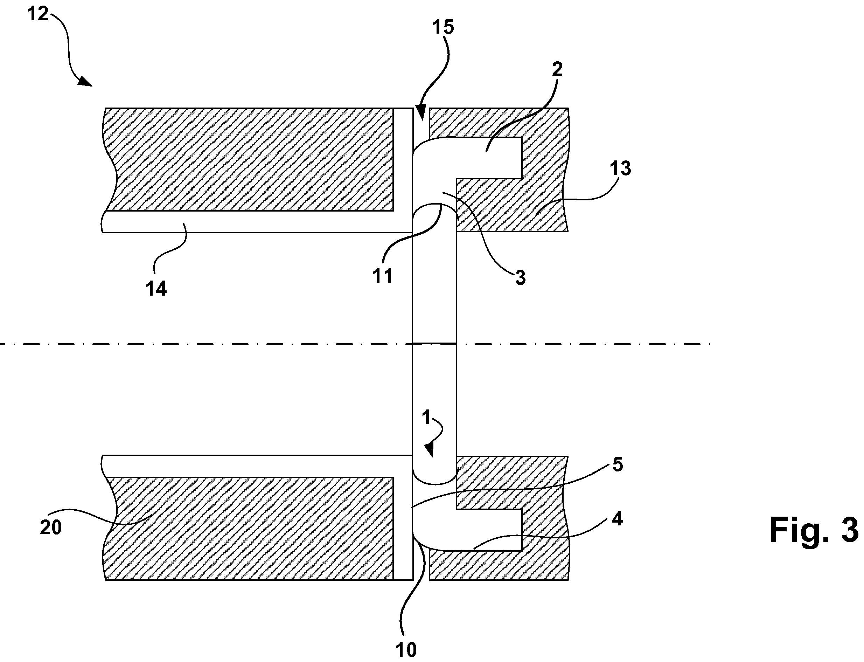

Die bekannten Dichtringe können sich im eingebauten Zustand bei einer Expansion, z.B. durch Temperaturerhöhung, im Wesentlichen senkrecht zu zwei Flächen ausdehnen. Zum einen senkrecht zur mediumsberührenden Fläche deren Querschnitt in Fig. 2 als Linie 11 dargestellt ist, zum anderen senkrecht zur Fläche, welche im Querschnitt in Fig. 2 durch die Linie senkrecht zu Linie 4 durch Punkt 18 dargestellt ist. Die Ausdehnung im Bereich der Linie 11 kann zu einer unerwünschten Änderung der Reinigbarkeit oder des Druckverlustes des Durchflussmessers 12 in Fig. 3 führen. Weiterhin kann es bei starken und häufigen Temperaturschwankungen durch wiederholte Ausdehnung und Kontraktion der Dichtung über die Kante der Auskleidung 14 oder des Prozessanschlusses 13 in Fig. 3 zu einer Beschädigung der Dichtung mit Einschränkung der Dichtwirkung oder den hygienischen Eigenschaften kommen. Kürzere Standzeiten der Dichtungen können die Folge sein.

Die JP 2005 003 141 A offenbart in Fig. 3 einen L-förmigen Ring, welcher als Abstandshalter auf einem W-förmigen Dichtelement aufliegt, derart, dass ein Schenkel des W-förmigen Dichtelements zwischen der abzudichtenden Fläche und dem L-förmigen Ring angeordnet ist. Daher erfüllt der L-förmige Ring der Fig. 3 nicht die Funktion eines Dichtringes.

Die US 4,565,380 A offenbart eine Vielzahl von Dichtringvarianten, so z.B. in den Fig. 20-22A einen S-förmigen Dichtring, jedoch keinen L-förmigen Dichtring. Die DE 103 12 824 A1 offenbart eine O-förmige Dichtung wobei die Dichtwirkung allerdings beim Ausüben eines Anpressdruckes von außen nach innen verläuft, d.h. das Material des Dichtungsringes wird in Richtung Zentrum gepresst.

Die DE 10 2007 040 099 A1 offenbart einen L-förmigen Dichtring mit einer Abrundung im Übergangsbereich der beiden Schenkel des Dichtrings. Das Material des Dichtringes weist einen vollfluorierten Kunststoff, so z.B ein Tetrafluorethylen (TFE)- Copolymer, zu einem Copolymeranteil von zumindest 0,5 Mol-% auf. Der in der DE 10 2007 040 099 A1 offenbarte Dichtring kann in Linsensystemen, so z.B. der EP 1 662 276 A1 eingesetzt werden.

Die JP 7 280 612 A offenbart einen L-förmigen Dichtring und einen Absorption Space 23 im Anschlussbereich eines Rohres. Dieser L-Dichtring weist eine Kante im Übergangsbereich der beiden Dichtringschenkel auf.

Die Aufgabe der Erfindung besteht darin, einen L-Dichtring vorzuschlagen, welcher bei Expansion, z.B. aufgrund von Temperaturerhöhung, eine Reduktion der Änderung des mediumsberührenden Profils bewirkt.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wieder.

Die Erfindung weist eine Vorrichtung mit einem magnetisch-induktiven Durchflussmessgerät und einem Prozessanschluss, sowie einen L-Dichtring auf, welcher zwischen einem magnetisch-induktivem Durchflussmessgerät und Prozessanschluss eingesetzt bzw. angeordnet ist, nach Anspruch 1.

Vorteilhafte Ausgestaltungen der Ansprüche sind Gegenstand der Unteransprüche.

Erfindungsgemäß weist der L-Dichtring zwei, im Querschnitt durch die Schnur des L-Dichtrings, L-förmig miteinander verbundenen Schenkel auf, wobei ein erster Schenkel durch eine erste Strecke zur Umwelt hin begrenzt ist, wobei die erste Strecke Teil einer Mantelfläche um eine Rotationsachse des L-Dichtrings ist, wobei der erste Schenkel zwischen der ersten Strecke und der Rotationsachse liegt, und wobei ein zweiter Schenkel durch eine zweite Strecke zur Umwelt hin begrenzt ist, welche erste und zweite Strecke über eine Verbindungskontur miteinander verbunden sind, und wobei ein Schnittpunkt einer ersten und zweiten Geraden, welche jeweils eine Verlängerung der ersten und zweiten Strecke bilden, einen Eckpunkt eines Dreiecks bildet, wobei die jeweiligen Endpunkte der ersten und zweiten Strecke weitere Eckpunkte des Dreiecks bilden, wobei der L-Dichtring so ausgestaltet ist, dass der Flächeninhalt der Querschnittfläche der Schnur des L-Dichtrings im Dreieck höchstens 60% des Flächeninhalts des Dreiecks beträgt, wobei die Fläche des L-Dichtrings im Dreieck nichtkonkav, insbesondere konvex ist.

Unter Einwirkung einer Vertikalkraft, also einer Kraft in Richtung der Rotationsachse, entfaltet der Dichtring eine Dichtwirkung von innen nach außen, also vom Schenkel in Richtung des Dreiecks. Durch die spezielle Ausgestaltung des L-Dichtringes wird der der Rotationsachse zugewandte innere Bereich des Dichtrings z.B. bei der Verpressung in geringerem Maße zur Rohrmitte hin bewegt, was z.B. im Falle einer Durchflussmessung die Entstehung von störenden Perturbationen der Strömung unterbinden kann.

Vorteilhafte Ausgestaltungen der Erfindung sind Gegenstand der Unteransprüche.

Es ist von Vorteil, wenn der L-Dichtring so ausgestaltet ist, dass sich die erste und zweite Gerade, welche jeweils eine Verlängerung der ersten und zweiten Strecke bilden, im eingebauten Zustand senkrecht im Schnittpunkt schneiden, welcher ein Eckpunkt eines Rechtecks bildet, wobei die jeweiligen Endpunkte der ersten und zweiten Strecke weitere Eckpunkte des Rechtecks bilden, wobei der L-Dichtring so ausgestaltet ist, dass der Flächeninhalt der Querschnittfläche der Schnur des L-Dichtrings im Rechteck mindestens 1% kleiner als der Flächeninhalt des Rechtecks ist, und wobei die Fläche des L-Dichtrings im Rechteck nichtkonkav, insbesondere konvex ist.

Es ist zudem von Vorteil, wenn ein erster Radius als Verbindungskontur die erste und zweite Strecke miteinander verbindet.

Dieser erste Radius weist vorteilhaft einen Radius von zumindest 2% des Abstands des Endpunkts der ersten Strecke des ersten Schenkels des L-Dichtrings von einer Rotationsachse (6) des L-Dichtrings (1) auf.

Eine noch bessere Vermeidung der Bewegung des der Rotationsachse zugewandten Teiles des zweiten Schenkels der Dichtung in Richtung der Rotationsachse aufgrund von Verpressung oder auch beispielsweise durch thermische Ausdehnung des Dichtungsmaterials bei Erhöhung der Prozesstemperatur gelingt durch eine nicht-konvexe Krümmung der zu der Rotationsachse des L-Dichtrings weisende Fläche des zweiten Schenkels des L-Dichtrings.

Ein bevorzugtes Material für den L-Dichtring ist ein Polymer, insbesondere ein EPDM oder beispielsweise auch ein FKM oder VMQ

Generell ist es vorteilhaft, die Dichtwirkung beim Schenkelende zu maximieren, sodass die Dichtung bei der Verpressung eine besonders gute Dichtwirkung in diesem Bereich sicherstellt.

Der L-Dichtring kann bei Einwirkung einer äusseren Kraft oder z.B. bei thermischer Expansion vorzugsweise durch Materialumverteilung in Richtung des Dreiecks unter Vergrößerung des Flächeninhalts der Querschnittfläche der Schnur des L-Dichtrings im Dreieck reagieren. Somit wird der Kreuzungsbereich der beiden Schenkel nach außen gedrückt, beispielsweise in die Ecke eines zwischen der Begrenzung des Einbauraumes und dem Dichtring bestehenden Hohlraumes.

Der Winkel zwischen den beiden Schenkeln des L im unverpressten Zustand beträgt vorzugsweise zwischen 75-115°, insbesondere zwischen 80-110°. Dies bewirkt eine stärkere Verpressung am Ende des ersten Schenkels und somit eine maximale Abdichtung direkt an der Kontaktstelle zum Medium. Gleichzeitig kann die der Rotationsachse zugewandte Seite des zweiten Schenkels auch bei Fertigungstoleranzen möglichst wenig bei der Kompression bewegt werden. Im Falle eines grösseren Ausgangsvolumens der Dichtung gegenüber dem Minimalvolumen kann die erfindungsgemässe Gestaltung des Radius zwischen der ersten und zweiten Strecke der Dichtung einen Expansionsraum am dem der maximalen Abdichtung abgewandten Seite des zweiten Schenkels zur Verfügung stellen.

Eine Ausgestaltung sieht vor, daß die erste Strecke des L-Dichtrings eine Dichtfläche mit dem Prozessanschluss bildet und wenn die zweite Strecke des L-Dichtrings eine Dichtfläche mit einer Messrohrauskleidung des magnetisch-induktiven Durchflussmessgeräts bildet.

Zwischen magnetisch-induktivem Durchflussmessgerät und Prozessanschlussadapter ist in einer weiteren Ausgestaltung gemäß Stand der Technik ein Spalt ausgebildet, durch welchen Fluid im Versagensfall des L-Dichtrings austreten kann, wobei die Verbindungskontur zwischen erster und zweiter Strecke vor dem Spalt angeordnet ist. Dadurch wird ein gerichtetes Ableiten des Fluids bei Versagen des Dichtringes vorteilhaft ermöglicht.

Um eine verbesserte Zentrierung und mechanische Stabilität der Dichtung zu ermöglichen, ist zumindest ein Schenkel in einem Schenkelbereich, welcher dem Dreieck abgewandt ist, in einer Aufnahme des Prozessanschlusses angeordnet ist, wobei der Schenkel bzw. Schenkelbereich in dieser Aufnahme allseitig am Prozessanschluss anliegt. Um andererseits auch hier einen zusätzlichen Expansionsraum zu schaffen, sieht eine vorteilhafte Ausgestaltung vor, dass der dem Dreieck abgewandte Bereich des ersten Schenkels nicht vollständig am Prozessanschluss anliegt, aber diesen in hinreichend vielen Punkten berührt, um eine ausreichende Stützwirkung und Zentrierung sicherzustellen.

Erfindungsgemäß ist ein L-Dichtring nach einem der Ansprüche 1 bis 6 zwischen dem Messgerät oder der Armatur und einem Prozessanschluss eingesetzt und ermöglicht dadurch einen Übergang eines Fluids vom Prozessanschluss in das Messrohr unter verringerter Perturbation durch die Dichtung.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt perspektivisch einen erfindungsgemäßen L-Dichtring,
- Fig. 2: zeigt einen erfindungsgemäßen L-Dichtring im Teilquerschnitt durch die Schnur des L-Dichtrings,
- Fig. 3: zeigt einen erfindungsgemäßen L-Dichtring erfindungsgemäß montiert zwischen einem magnetisch-induktiven Durchflussmessgerät und einem separaten Prozessanschluss im Längsschnitt.

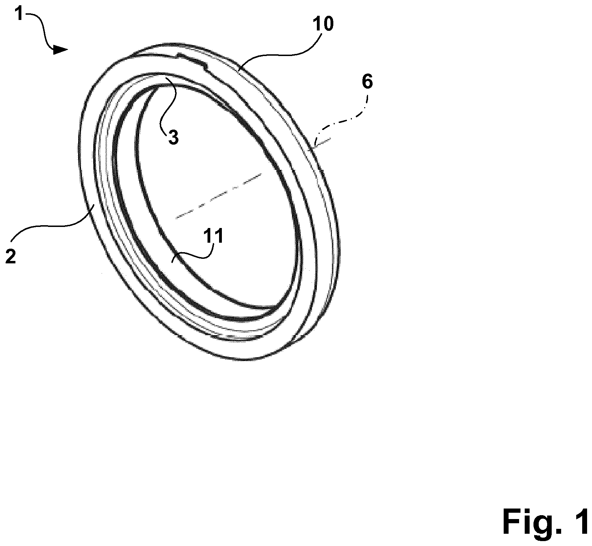

In Fig. 1 ist ein erfindungsgemäßer L-Dichtring 1 perspektivisch dargestellt. In Fig. 2 ist dargestellt, dass er einen kreisförmigen Querschnitt und eine L-förmige Schnur aufweist und somit zwei, im Querschnitt L-förmig in einem Scheitel miteinander verbundene Schenkel 2 und 3. Ein L-Dichtring ist ein geschlossener, kreisförmiger Dichtring, vergleichbar mit einem O-Ring, jedoch mit L-förmigem Querschnitt durch seine Schnur, statt mit einem O-förmigen Querschnitt durch seine Schnur, wie beim besagten O-Ring. Die Schenkel schließen im nichtmontierten Zustand des L-Dichtrings gemäß einer Ausgestaltung der Erfindung einen Winkel größer oder gleich 90° ein.

Ein erster Schenkel 2 weist erfindungsgemäß, wie in Fig. 2 verdeutlicht, dabei im Querschnitt durch die Schnur des L-Dichtrings 1 eine erste Strecke 4 als Außenkontur auf, durch welche er zur Umwelt hin begrenzt ist. Gleichermaßen weist ein zweiter Schenkel 3 im Querschnitt durch die Schnur des L-Dichtrings 1 eine zweite Strecke 5 als Außenkontur auf, durch welche der zweite Schenkel 3 zur Umwelt hin begrenzt ist.

Der L-Dichtring ist dabei so geformt, dass die erste Strecke 4 Teil einer äußeren Mantelfläche um eine Rotationsachse 6 des L-Dichtrings 1 ist, wobei der erste Schenkel 2 zwischen der ersten Strecke 4 und der Rotationsachse 6 liegt. Die erste Strecke 4 und die zweite Strecke 5 sind über eine Verbindungskontur indirekt oder mittelbar miteinander verbunden, wobei sie sich nicht schneiden. Die Verbindungskontur hat somit eine Länge grösser Null im Gegensatz zum Stand der Technik. In dieser Darstellung handelt es sich bei der Verbindungskontur um einen ersten Radius 10, welcher die erste und zweite Strecke miteinander verbindet. Es wäre aber auch eine weitere Strecke zwischen erster und zweiter Strecke 4 und 5 denkbar; dann wiese der L-Dichtring 1 anstelle des ersten Radius' 10 eine Fase auf. Gemäß einer Ausgestaltung der Erfindung ist die Verbindungslinie 10 zwischen den Punkten 8 und 9 als beliebige nichtkonvexe Linie ausgeführt, die das durch die Punkte 7, 8 und 9 gebildete Dreieck nur in den Punkten 8 und 9 berührt.

Der erste Radius 10 befindet sich im Scheitel des ersten und zweiten Schenkels 2 und 3. Er weist weitergebildet einen Radius von zumindest 2%, insbesondere mindestens 5%, insbesondere mindestens 10%, insbesondere mindestens 20% des Abstands des ersten Endpunkts 8 der ersten Strecke 4 des ersten Schenkels 2 des L-Dichtrings 1 von der Rotationsachse 6 des L-Dichtrings 1 auf. Der doppelte Wert dieses Abstands entspricht hier dem Wert des Außendurchmessers des L-Dichtrings 1.

Fig. 2 zeigt einen L-Dichtring 1 im Schnitt, der erfindungsgemäß so ausgestaltet ist, dass ein gedachter Schnittpunkt 7 einer ersten und zweiten Geraden 16 und 17, welche jeweils eine Verlängerung der ersten und zweiten Strecke 4 und 5 darstellen, ein Eckpunkt eines gedachten Dreiecks bildet, wobei die jeweiligen ersten Endpunkte 8 und 9 der ersten und zweiten Strecke 4 und 5 weitere Eckpunkte des Dreiecks bilden, wobei der L-Dichtring 1, insbesondere die Verbindungskontur des L-Dichtrings 1, so ausgestaltet ist, dass der Flächeninhalt der Querschnittfläche der Schnur des L-Dichtrings 1 im Dreieck höchstens 60%, insbesondere höchstens 20%, insbesondere höchstens 10%, insbesondere höchstens 1%, des Flächeninhalts des virtuellen Dreiecks beträgt, wobei die Fläche des L-Dichtrings im Dreieck nichtkonkav, insbesondere konvex ist. Die Querschnittfläche der Schnur des L-Dichtrings 1 im Dreieck ist hier gepunktet gezeichnet.

Der Flächeninhalt der Querschnittfläche der Schnur des L-Dichtrings 1 im Dreieck kann 0% des Flächeninhalts des Dreiecks betragen, nämlich dann, wenn die direkte Verbindungslinie zwischen den ersten Endpunkten 8 und 9 der beiden Strecken 4 und 5 den Schnitt durch den L-Dichtring 1 begrenzt. Dann ist die Fläche im Dreieck auch nichtkonkav, da die Fläche im Dreieck, unter der Annahme, dass die Verbindungslinie zum Dreieck gehört, nur aus einer Linie besteht, welche ihrerseits nichtkonkav ist. Dann handelt es sich wiederum um einen angefasten L-Dichtring, statt um den gezeichneten L-Dichtring mit Radius.

Im Vergleich zu einem herkömmlichen L-Dichtring, bei welchem sich die erste und zweite Strecke 4 und 5 im Querschnitt durch die Schnur des L-Dichtrings in einem vorgegebenen Winkel, z.B. 90°, schneiden, ist im Bereich des Scheitels beider L-förmig verbundener Schenkel eine Volumenreduktion zu verzeichnen, welche zu einer geringeren Ausdehnung der Dichtung bei Temperaturerhöhung oder Quellung führt. Außerdem hat die Dichtung in diesem Bereich einen größeren Expansionsraum. Dies führt dazu, dass die Kontur 11 der Dichtung relativ zum Prozessanschluss 13 und zur Auskleidung 14 in geringerem Masse durch die Expansion der Dichtung beeinflusst wird.

In einer Ausgestaltung der Erfindung, wie hier zu sehen, ist die erste Strecke 4 gebildet durch den Querschnitt durch die Schnur des L-Dichtrings 1 mit einer ersten kreiszylindrischen Mantelfläche des ersten Schenkels 2 um eine Rotationsachse 6 des L-Dichtrings 1. Der erste Schenkel 2 ist dann eingefasst von einer ersten kreiszylindrischen Mantelfläche um die Rotationsachse des L-Dichtrings und beispielsweise von einer zweiten, insbesondere kreiszylindrischen, Mantelfläche um die Rotationsachse des L-Dichtrings. Der zweite Schenkel 3 weist eine, insbesondere in einer Ebene senkrecht zur Rotationsachse 6 liegende, Dichtfläche auf, welche im Längsschnitt durch den L-Dichtring bzw. im Querschnitt durch die Schnur des L-Dichtrings 1 als zweite Strecke 5 in Erscheindung tritt.

Gemäß einer weiteren Weiterbildung ist der L-Dichtring 1 so ausgestaltet ist, dass sich die erste und zweite Gerade 16 und 17, welche jeweils eine Verlängerung der ersten und zweiten Strecke 4 und 5 darstellen, senkrecht im gedachten virtuellen Schnittpunkt 7 schneiden, welcher ein Eckpunkt einer virtuellen Raute, insbesondere einem hier dargestellten gedachten Rechteck, bildet, wobei die jeweiligen ersten Endpunkte 8 und 9 der ersten und zweiten Strecke 4 und 5 weitere Eckpunkte der Raute bzw. des Rechtecks bilden. Die Strecken 16 und 17 bilden somit zwei Kanten der Raute bzw. des Rechtecks. Der vierte Eckpunkt der Raute bzw. des Rechtecks wird gebildet durch den Schnittpunkt einer Geraden senkrecht zur Linie 4 durch Punkt 8 in der Schnittebene und einer Geraden senkrecht zur Linie 5 in der Schnittebene durch Punkt 9. Der L-Dichtring 1, insbesondere die Verbindungskontur des L-Dichtrings 1, ist dabei so ausgestaltet ist, dass der Flächeninhalt der Querschnittfläche der Schnur des L-Dichtrings in der Raute bzw. hier im Rechteck um 1%, insbesondere 10%, insbesondere 20%, insbesondere 50% kleiner ist als der Flächeninhalt der Raute bzw. des Rechtecks, wobei die Fläche des Querschnitts durch die Schnur des L-Dichtrings 1 in der Raute bzw. im Rechteck nichtkonvex , insbesondere konvex ist. Die Querschnittfläche der Schnur des L-Dichtrings 1 im Rechteck ist hier schraffiert und gepunktet dargestellt.

Der Flächeninhalt der Raute ist also auf 100% festgelegt. Ist der Flächeninhalt Schnittfläche der Dichtung in der Raute 21 % kleiner, beträgt sie somit also 79% des Flächeninhalts der Raute. Ein Rechteck ist eine Raute mit vier rechten Winkeln. Das bedeutet, dass die erste und zweite Strecke 16 und 17 senkrecht aufeinander stehen.

Der erfindungsgemäße L-Dichtring 1 weist einen zweiten Radius 11 in der zur Rotationsachse 6 des L-Dichtrings 1 weisenden Fläche des zweiten Schenkels 3 des L-Dichtrings 1 auf. Diese Fläche ist somit konkav gekrümmt. Der zweite Radius 11 weist dabei einen Radius von zumindest 5%, insbesondere mindestens 10%, insbesondere mindestens 50%, insbesondere mindestens 100%, insbesondere mindestens 200%, des Abstands eines zweiten Endpunkts 19 der zweiten Strecke 5 des zweiten Schenkels 3 des L-Dichtrings von einer Rotationsachse 6 des L-Dichtrings 1 auf. Der doppelte Abstand des zweiten Endpunkts 19 zur Rotationsachse 6 legt dabei den Innendurchmesser des L-Dichtrings fest.

Verwendung findet eine erfindungsgemäße L-Dichtung in der industriellen Prozesstechnik, zwischen einem magnetisch-induktiven Durchflussmessgerät und einem Prozessanschluss. Eine solche Vorrichtung mit einem magnetisch-induktiven Durchflussmessgerät 12, einem Prozessanschluss 13 und einem erfindungsgemäßem L-Dichtring 1 ist in Fig. 3 verdeutlicht, wobei der erfindungsgemäße L-Dichtring 1 zwischen magnetisch-induktivem Durchflussmessgerät 12 und Prozessanschluss 13 dichtend eingesetzt ist.

Der Längsschnitt durch die erfindungsgemäße Vorrichtung in Fig. 3 liegt in der Ebene der Rotationsachse. Gleichermaßen liegt in der Querschnittsebene durch die Schnur gemäß Fig. 2 die Rotationsachse 6. Es handelt sich somit um dieselbe Schnittebene.

Die erste Strecke 4 des L-Dichtrings 1 berührt dabei den Prozessanschluss 13. Dadurch wird die Dichtung 3 im Prozessanschluss 13 zentriert. Die zweite Strecke 5 des L-Dichtrings 1 im Querschnitt bildet eine Dichtfläche mit einem Liner 14 eines Messrohrs 20 des magnetisch-induktiven Durchflussmessgeräts 12.

Gemäß der veranschaulichten Weiterbildung besteht dabei zwischen dem magnetisch-induktivem Durchflussmessgerät 12 und dem Prozessanschluss 13 ein Ringspalt 15, durch welchen Fluid im Versagensfall des L-Dichtrings 1 austreten kann, wobei die Verbindungskontur, hier der erste Radius 10, zwischen erster und zweiter Strecke 4 und 5 in dem Spalt 15 angeordnet ist. Auch der zweite Radius 11 ist gezeigt. Durch ihn wird sichergestellt, bei einer axialen Verkürzung des zweiten Schenkels 3 parallel zur Rotationsachse 6, dass keine Spalte mit dem Liner 14 oder dem Prozessanschluss 13 gebildet werden, welche Hygienevorschriften nicht genügen würden. Die Ausdehnung des zweiten Schenkels 3 wird insbesondere durch die erfindungsgemäße Gestaltung der Verbindungskontur zwischen den Endpunkten 8 und 9 und der Position (Abstand von Punkt 18 bzw. 19) der Endpunkte 8 und 9 der Strecken 4 und 5 mit dem Ziel der Volumenreduktion minimiert. Eine Volumenreduktion auf diese Weise hat gegenüber einer weniger breiten Gestaltung des Schenkels 3 den Vorteil, dass die absolute Sollverpressung (ausgedrückt in der Dimension Länge) gegenüber der nicht volumenreduzierten Gestaltung der Dichtung nicht reduziert werden muss, und somit die Toleranzaufnahme beibehalten wird. Gegenüber einer weniger breiten Gestaltung des Schenkels 2 hat die erfindungsgemäße Volumenreduktion den Vorteil, dass die Position der Zentrierungsfläche 4 mit bereits installierten Prozessanschlüssen 13 kompatibel ist.

Bei dem Prozessanschluss 13 kann es sich um einen Adapter für einen vorgegebenen Prozessanschluss handeln, beispielsweise auch um einen Schweißstutzen. Er könnte somit auch Prozessanschlussadapter genannt werden. Neben dem Ringspalt 15 kann eine so genannte Entlüftungsnut im Prozessanschluss 13 vorgesehen sein. Diese verläuft z.B. in einer Ebene senkrecht zur Rotationsachse des montierten L-Dichtrings parallel zu einem Durchmesser des L-Dichtrings. Die Entlüftungsnut ist ebenfalls dazu bestimmt, Fluid nach außen zu leiten.

Gemäß einer Weiterbildung der Erfindung ist der L-Dichtring 1 aus einem Elastomer, insbesondere aus EPDM, aus VMQ, aus FKM, oder aus FFKM hergestellt.

Die Dichtflächenpaare werden beispielsweise gebildet auf der Seite Richtung Durchflussmessgerät 12 (bei Linie 5 in Fig. 2)durch den L-Dichtring aus einem der o.g. Elastomere und einer Messrohrauskleidung 14 aus Kunststoff, insbesondere PFA, und auf der anderen Seite Richtung Prozessanschluss 13 durch den L-Dichtring und einem Prozessanschluss 13 aus Metall, insbesondere Edelstahl, insbesondere 1.4404.

Die in den Fig. 1-3 dargestellten Ausführungsbeispiele sind lediglich bevorzugte Varianten eines erfindungsgemäßen Dichtringes. Der Dichtring kann selbstverständlich noch durch das Fachwissen eines Durchschnittsfachmanns weiterentwickelt werden, beispielsweise durch Ausbildung mehrerer weiterer Ausweichräume im Bereich der Schenkel des L-förmigen Dichtringes.

### Bezugszeichenliste

- 1: L-Dichtring
- 2: Erster Schenkel
- 3: Zweiter Schenkel
- 4: Erste Strecke
- 5: Zweite Strecke
- 6: Rotationsachse des L-Dichtrings
- 7: Schnittpunkt
- 8: Erster Endpunkt der ersten Strecke
- 9: Erster Endpunkt der zweiten Strecke
- 10: Erster Radius
- 11: Zweiter Radius
- 12: Magnetisch-induktives Durchflussmessgerät
- 13: Prozessanschluss
- 14: Auskleidung des magnetisch-induktiven Durchflussmessgeräts
- 15: Ringspalt
- 16: Erste Gerade
- 17: Zweite Gerade
- 18: Zweiter Endpunkt der ersten Strecke
- 19: Zweiter Endpunkt der zweiten Strecke
- 20: Messrohr

## Patentansprüche

1. Vorrichtung mit einem magnetisch-induktiven Durchflussmessgerät (12) und einem Prozessanschluss (13) und einem L-Dichtring, wobei der L-Dichtring (1) zwischen dem magnetisch-induktiven
Durchflussmessgerät (12) und dem Prozessanschluss (13) eingesetzt ist, wobei der L-Dichtring (1) zwei im
Querschnitt durch die Schnur des L-Dichtrings (1), L-förmig miteinander verbundene Schenkel (2, 3) aufweist, wobei ein erster Schenkel (2) durch eine erste Strecke (4) zur Umwelt hin begrenzt ist, wobei die erste Strecke (4) Teil einer Mantelfläche um eine Rotationsachse (6) des L-Dichtrings (1) ist, wobei der erste Schenkel (2) zwischen der ersten Strecke (4) und der Rotationsachse (6) liegt, und wobei ein zweiter Schenkel (3) durch eine zweite Strecke (5) zur Umwelt hin begrenzt ist, welche erste und zweite Strecke (4, 5) über eine Verbindungskontur miteinander verbunden sind,
**dadurch gekennzeichnet, dass** ein Schnittpunkt (7) einer ersten (16) und zweiten (17) Geraden, welche jeweils eine Verlängerung der ersten und zweiten Strecke (4, 5) bilden, ein Eckpunkt (7) eines Dreiecks bildet, wobei die jeweiligen Endpunkte (8, 9) der ersten und zweiten Strecke (4, 5) weitere Eckpunkte des Dreiecks (7, 8, 9) bilden, wobei der L-Dichtring (1) so ausgestaltet ist, dass der
Flächeninhalt der Querschnittfläche der Schnur des L-Dichtrings im Dreieck höchstens
60% des Flächeninhalts des Dreiecks beträgt, wobei die Fläche des L-Dichtrings (1) im
Dreieck nichtkonkav, insbesondere konvex ist und wobei
der L-Dichtring (1) im eingebauten Zustand in Zusammenwirkung mit einem äußeren Anschlag des abzudichtenden magnetisch-induktiven Durchflussmessgeräts (12) einen Ausweichraum ausbildet, wobei der L-ZDichtring bei Nutzung des Ausweichraumes eine Vergrößerung des Flächeninhaltes
der Querschnittfläche der Schnur des L-Dichtrings im Dreieck aufweist,
wobei der L-Dichtring einen zweiten Radius (11) in der zur Rotationsachse (6) des L-Dichtrings (1) weisenden Fläche des zweiten Schenkels (3) aufweist, welche Fläche konkav gekrümmt ist.

2. Vorrichtung nach Anspruch 1,
**dadurch gekennzeichnet,**
**dass** der L-Dichtring (1) so ausgestaltet ist, dass sich die erste und zweite Gerade, welche jeweils eine Verlängerung der ersten und zweiten Strecke (4, 5) bilden, im eingebauten Zustand senkrecht im Schnittpunkt (7) schneiden, welcher einen Eckpunkt
eines Rechtecks bildet, wobei die jeweiligen Endpunkte (8, 9) der ersten und zweiten Strecke (4, 5) weitere Eckpunkte des Rechtecks bilden, wobei der L-Dichtring (1) so ausgestaltet ist, dass der Flächeninhalt der Querschnittfläche der Schnur des L-Dichtrings
(1) im Rechteck mindestens 1 % kleiner als der Flächeninhalt des Rechtecks ist, und wobei die Fläche des L-Dichtrings (1) im Rechteck nichtkonkav, insbesondere konvex ist.

3. Vorrichtung nach einem der Ansprüche 1 oder 2,
**dadurch gekennzeichnet,**
**dass** ein erster Radius (10) als Verbindungskontur die erste und zweite Strecke (4, 5)
miteinander verbindet.

4. Vorrichtung nach Anspruch 3,
**dadurch gekennzeichnet,**
**dass** der erste Radius (10) einen Radius von zumindest 2% des Abstands des Endpunkts
(8) der ersten Strecke (4) des ersten Schenkels (2) des L-Dichtrings von einer Rotationsachse (6) des L-Dichtrings (1) aufweist.

5. Vorrichtung nach einem der Ansprüche 1 bis 4,
**dadurch gekennzeichnet,**
**dass** eine zu einer Rotationsachse (6) des L-Dichtrings (1) weisende Fläche des zweiten
Schenkels (5) des L-Dichtrings (1) nichtkonvex gekrümmt ist.

6. Vorrichtung nach einem der Ansprüche 1 bis 5,
**dadurch gekennzeichnet,**
**dass** der L-Dichtring (1) aus einem Polymer, insbesondere einem EPDM hergestellt ist.

7. Vorrichtung nach einem der vorhergehenden Ansprüche,
**dadurch gekennzeichnet,**
**dass** der L-Dichtring (1) derart ausgebildet ist, dass er unter Einwirkung von prozessbedingter Expansion, insbesondere von thermischer Expansion durch eine Ausweichbewegung in Richtung des Dreiecks reagiert.

8. Vorrichtung nach einem der vorhergehenden Ansprüche,
**dadurch gekennzeichnet,**
**dass** der L-Dichtring (1) im eingebauten Zustand in Zusammenwirkung mit einem äußeren Anschlag des abzudichtenden magnetisch-induktiven Durchflussmessgeräts (12) den Ausweichraum ausbildet wobei der L-Dichtring bei Nutzung des Ausweichraumes, durch Ausführung der Ausweichbewegung nach Anspruch 7, eine Vergrößerung des Flächeninhaltes der Querschnittfläche der Schnur des L-Dichtrings im Dreieck aufweist.

9. Vorrichtung nach einem der vorhergehenden Ansprüche,
**dadurch gekennzeichnet,**
**dass** der Winkel zwischen dem ersten und dem zweiten Schenkel (2, 3) der L-Form im nicht-eingebauten Zustand zwischen 75-115°, vorzugsweise zwischen 80-110° beträgt.

10. Vorrichtung nach einem der vorhergehenden Ansprüche,
**dadurch gekennzeichnet,**
**dass** die erste Strecke (4) des L-Dichtrings (1) den Prozessanschluss (13) berührt und,
**dass** die zweite Strecke (5) des L-Dichtrings (1) eine Dichtfläche mit einem Liner (14) des magnetisch-induktiven Durchflussmessgeräts, (12) bildet.

11. Vorrichtung nach einem der vorhergehenden Ansprüche,
**dadurch gekennzeichnet,**
**dass** zwischen magnetisch-induktivem Durchflussmessgerät (12) und Prozessanschlussadapter (13) ein Spalt (15) gebildet ist, durch welchen Fluid im Versagensfall des L-Dichtrings (1) austreten kann, wobei die Verbindungskontur (10) zwischen erster und zweiter Strecke (4, 5) vor dem Spalt (15) angeordnet ist.

12. Vorrichtung nach einem der vorhergehenden Ansprüche,
**dadurch gekennzeichnet,**
**dass** zumindest ein erster Schenkel (2) oberhalb des Dreiecks in einer Aufnahme des
Prozessanschlusses (13) angeordnet ist, wobei der erste Schenkel (2) in dieser Aufnahme allseitig am Prozessanschluss (13) anliegt.

13. Vorrichtung mit einem Messgerät oder einer Armatur und einem Prozessanschluss,
**dadurch gekennzeichnet,**
**dass** ein L-Dichtring (1) nach einem der Ansprüche 1 bis 9 zwischen dem Messgerät oder
der Armatur und einem Prozessanschluss (13) eingesetzt ist.

## Claims

1. Apparatus with an electromagnetic flowmeter (12) and a process connection (13) and a L-sealing ring, wherein the L-sealing ring (1) is inserted between the electromagnetic flowmeter (12) and the process connection (13), wherein, in the cross-section through the line of the L-sealing ring (1), the L-sealing ring has two interconnected L-shaped legs (2, 3), wherein a first leg (2) is limited in relation to the environment by a first section (4), the first section (4) being part of the shell surface around an axis of rotation (6) of the L-sealing ring (1), wherein the first leg (2) is located between the first section (4) and the axis of rotation (6), and wherein a second leg (3) is limited in relation to the environment by a second section (5), said first and second section (4, 5) being interconnected by a connection contour,
**characterized in that**
a point of intersection (7) of a first (16) and a second straight line (17), which are each an extension of the first and second section (4, 5) respectively, forms a corner point (7) of a triangle, wherein the respective end points (8, 9) of the first and second section (4, 5) form other corner points of the triangle (7, 8, 9), wherein the L-sealing ring (1) is designed in such a way that the surface area of the cross-sectional area of the line of the L-sealing ring in the triangle is at maximum 60% of the surface area of the triangle, wherein the surface of the L-sealing ring (1) in the triangle is not concave, and in particular is convex, and wherein the L-sealing ring (1), in the installed state, forms an alternate space for expansion in combination with an outer stop of the electromagnetic flowmeter (12) to be sealed, wherein, when the alternate space is used, the sealing ring presents an increase in the surface area of the cross-sectional area of the line of the L-sealing ring in the triangle, wherein the L-sealing ring (1) has a second radius (11) in the surface of the second leg (3) facing towards the axis of rotation (6) of the L-sealing ring, said surface being curved in a concave manner.

2. Apparatus as claimed in Claim 1,
**characterized in that**
the L-sealing ring (1) is designed in such a way that the first and second straight line which form, respectively, an extension of the first and second section (4, 5), vertically intersect one another, in the installed state, at the point of intersection (7) which forms a corner point of a square, wherein the respective end points (8, 9) of the first and second section (4, 5) form other corner points of the square, wherein the L-sealing ring (1) is designed in such a way that the surface area of the cross-sectional surface of the line of the L-sealing ring (1) in the square is at least 1 % less than the surface area of the square, and wherein the surface of the L-sealing ring (1) in the square is not concave, and particularly is convex.

3. Apparatus as claimed in one of the Claims 1 or 2,
**characterized in that**
a first radius (10) interconnects the first and second section (4, 5) as a connection contour.

4. Apparatus as claimed in Claim 3,
**characterized in that**
the first radius (10) has a radius of at least 2% of the distance of the end point (8) of the first section (4) of the first leg (2) of the L-sealing ring from an axis of rotation (6) of the L-sealing ring (1).

5. Apparatus as claimed in one of the Claims 1 to 4,
**characterized in that**
a surface of the second leg (5) of the L-sealing ring (1) that faces towards an axis of rotation (6) of the L-sealing ring (1) is curved in a non-convex manner.

6. Apparatus as claimed in one of the Claims 1 to 5,
**characterized in that**
the L-sealing ring (1) is made from a polymer, particularly an EPDM.

7. Apparatus as claimed in one of the previous claims,
**characterized in that**
the L-sealing ring (1) is designed in such a way that, under the effect of process-related expansion, particularly thermal expansion, it reacts with a shift in the direction of the triangle.

8. Apparatus as claimed in one of the previous claims,
**characterized in that**
the L-sealing ring (1), in the installed state, forms the alternate space in combination with an outer stop of the electromagnetic flowmeter (12) to be sealed, wherein, when the alternate space is used, the sealing ring presents an increase in the surface area of the cross-sectional area of the line of the L-sealing ring in the triangle by performing the shift movement as claimed in Claim 7.

9. Apparatus as claimed in one of the previous claims,
**characterized in that**
the angle between the first and second leg (2, 3) of the L-shape, in the non-installed state, is between 75 and 115°, preferably between 80 and 110°.

10. Apparatus as claimed in one of the previous claims,
**characterized in that**
the first section (4) of the L-sealing ring (1) touches the process connection (13) and **in that** the second section (5) of the L-sealing ring (1) forms a sealing surface with a liner (14) of the electromagnetic flowmeter (12).

11. Apparatus as claimed in one of the previous claims,
**characterized in that**
a gap (15) is formed between the electromagnetic flowmeter (12) and the process connection adapter (13), through said gap fluid can leak if the L-sealing ring (1) fails, wherein the connection contour (10) between the first and second section (4, 5) is arranged in front of the gap (15).

12. Apparatus as claimed in one of the previous claims,
**characterized in that**
at least a first leg (2) is arranged above the triangle in a support of the process connection (13), wherein the first leg (2) rests against the process connection (13) on all sides in this support.

13. Apparatus with a measuring device or an assembly and a process connection,
**characterized in that**
an L-sealing ring (1) as claimed in one of the claims 1 to 9 is inserted between the measuring device or the assembly and a process connection (13).

## Revendications

1. Dispositif avec un débitmètre magnéto-inductif (12) et un raccord-process (13) et une bague d'étanchéité en L, la bague d'étanchéité en L (1) étant insérée entre le débitmètre magnéto-inductif (12) et le raccord-process (13), la bague d'étanchéité en L présentant, dans la section transversale à travers le cordon de la bague d'étanchéité (1), deux branches (2, 3) en forme de L reliées entre elles, une première branche (2) étant limitée par rapport à l'environnement par un premier tronçon (4), le premier tronçon (4) faisant partie d'une surface latérale autour de l'axe de rotation (6) de la bague d'étanchéité en L (1), la première branche (2) étant située entre le premier tronçon (4) et l'axe de rotation (6), et une deuxième branche (4) étant limitée par rapport à l'environnement par un deuxième tronçon (5), lequel premier et lequel deuxième tronçon (4, 5) étant reliés entre eux par l'intermédiaire d'un contour de jonction,
**caractérisé**
**en ce qu'**un point d'intersection (7) d'une première droite (16) et d'une deuxième droite (17), qui forment respectivement un prolongement du premier et du deuxième tronçon (4, 5), forme le point d'angle (7) d'un triangle, les points d'angle (8, 9) respectifs du premier et du deuxième tronçon (4, 5) formant d'autres points d'angle du triangle (7, 8, 9), la bague d'étanchéité en L étant conçue de telle sorte que l'aire de la section du cordon de la bague d'étanchéité en L dans le triangle s'élève au maximum à 60 % de l'aire du triangle, la surface de la bague d'étanchéité en L (1) dans le triangle n'étant pas concave, étant notamment convexe, et la bague d'étanchéité en L (1) constituant, à l'état monté, en liaison avec une butée extérieure du débitmètre magnéto-inductif (12) dont l'étanchéité doit être assurée, un espace de dégagement, la bague d'étanchéité présentant, en cas d'utilisation de l'espace de dégagement, une augmentation de l'aire de la section du cordon de la bague d'étanchéité en L dans le triangle, la bague d'étanchéité en L (1) présentant un deuxième rayon (11) dans la surface orientée vers l'axe de rotation (6) de la bague d'étanchéité en L (1) de la deuxième branche (3), laquelle surface est courbée de façon concave.

2. Dispositif selon la revendication 1,
**caractérisé**
**en ce que** la bague d'étanchéité en L (1) est conçue de telle sorte que la première et la deuxième droite, qui forment respectivement un prolongement du premier et du deuxième tronçon (4, 5), se coupent, à l'état monté, perpendiculairement au point d'intersection (7) qui forme un point d'angle d'un rectangle, les points finaux (8, 9) respectifs du premier et du deuxième tronçon (4, 5) formant d'autres points d'angle du rectangle, la bague d'étanchéité en L (L) étant conçue de telle sorte que l'aire de la section du cordon de la bague d'étanchéité en L (1) dans le rectangle est au moins inférieure de 1 % à l'aide du rectangle, et la surface de la bague d'étanchéité en L (1) dans le rectangle n'étant pas concave, étant notamment convexe.

3. Dispositif selon la revendication 1 ou 2,
**caractérisé**
**en ce qu'**un premier rayon (10) relie entre eux, en tant que contour de jonction, le premier et le deuxième tronçon (4, 5).

4. Dispositif selon la revendication 3,
**caractérisé**
**en ce que** le premier rayon (10) présente un rayon d'au moins 2 % de la distance du point final (8) du premier tronçon (4) de la première branche (2) de la bague d'étanchéité en L part rapport à un axe de rotation (6) de la bague d'étanchéité en L (1).

5. Dispositif selon l'une des revendications 1 à 4,
**caractérisé**
**en ce qu'**une surface orientée vers un axe de rotation (6) de la bague d'étanchéité en L (1) de la deuxième branche (5) de la bague d'étanchéité en L (1) est courbée de manière non convexe.

6. Dispositif selon l'une des revendications 1 à 5,
**caractérisé**
**en ce que** la bague d'étanchéité en L (1) est fabriquée en un polymère, notamment un EPDM.

7. Dispositif selon l'une des revendications précédentes,
**caractérisé**
**en ce que** la bague d'étanchéité en L (1) est conçue de telle sorte à réagir sous l'effet de la dilatation due au process, notamment de la dilatation thermique par un mouvement de dégagement en direction du triangle.

8. Dispositif selon l'une des revendications précédentes,
**caractérisé**
**en ce que** la bague d'étanchéité en L (1) constitue, à l'état monté, en liaison avec une butée extérieure du débitmètre magnéto-inductif (12) dont l'étanchéité doit être assurée, l'espace de dégagement, la bague d'étanchéité présentant, en cas d'utilisation de l'espace de dégagement, avec l'exécution du mouvement de dégagement selon la revendication 7, une augmentation de l'aire de la section du cordon de la bague d'étanchéité en L dans le triangle.

9. Dispositif selon l'une des revendications précédentes,
**caractérisé**
**en ce que** l'angle entre la première et la deuxième branche (2, 3) de la forme L est compris, à l'état non monté, entre 75 et 115°, de préférence entre 80 et 110°.

10. Dispositif selon l'une des revendications précédentes,
**caractérisé**
**en ce que** le premier tronçon (4) de la bague d'étanchéité en L (1) touche le raccord-process (13) et en ce que le deuxième tronçon (5) de la bague d'étanchéité en L (1) forme une surface d'étanchéité avec un revêtement (14) du débitmètre magnéto-inductif (12).

11. Dispositif selon l'une des revendications précédentes,
**caractérisé**
**en ce qu'**est formée, entre le débitmètre magnéto-inductif (12) et l'adaptateur de raccord-process (13), une fente (15) à travers laquelle le fluide peut s'échapper en cas de défaillance de la bague d'étanchéité en L (1), le contour de jonction (10) étant disposé entre le premier et le deuxième tronçon (4, 5) devant la fente (15).

12. Dispositif selon l'une des revendications précédentes,
**caractérisé**
**en ce qu'**au moins une branche (2) est disposée au-dessus du triangle, dans un logement du raccord-process (13), la première branche (2) reposant dans ce logement sur tous les côtés contre le raccord-process (13).

13. Dispositif avec un appareil de mesure ou une sonde et un raccord-process,
**caractérisé**
**en ce qu'**une bague d'étanchéité en L (1) selon l'une des revendications 1 à 9 est utilisée entre l'appareil de mesure et la sonde et un raccord-process (13).
